(19) Europäisches Patentamt
European Patent Office
Office européen des brevets

(11) Veröffentlichungsnummer : **0 022 981**
**B1**

(12) # EUROPÄISCHE PATENTSCHRIFT

(45) Veröffentlichungstag der Patentschrift : **24.11.82**

(51) Int. Cl.³ : **C 09 B 29/42**

(21) Anmeldenummer : **80103901.7**

(22) Anmeldetag : **09.07.80**

(54) **Farbstoffmischungen der Azo-aminopyridinreihe.**

(30) Priorität : **23.07.79 DE 2929848**

(43) Veröffentlichungstag der Anmeldung : **28.01.81 (Patentblatt 81/04)**

(45) Bekanntmachung des Hinweises auf die Patenterteilung : **24.11.82 Patentblatt 82/47**

(84) Benannte Vertragsstaaten : **CH DE FR GB IT LI**

(56) Entgegenhaltungen :
**DE A 2 062 717**
**FR A 2 187 857**

(73) Patentinhaber : **BASF Aktiengesellschaft**
**Carl-Bosch-Strasse 38**
**D-6700 Ludwigshafen (DE)**

(72) Erfinder : **Henning, Georg, Dr.**
**Thorwaldsenstrasse 3**
**D-6700 Ludwigshafen (DE)**
Erfinder : **Honigmann, Bertold, Dr.**
**Leuschnerstrasse 42**
**D-6700 Ludwigshafen (DE)**
Erfinder : **Lamm, Gunther, Dr.**
**Heinrich-Heine-Strasse 7**
**D-6733 Hassloch (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Farbstoffmischungen der Azo-aminopyridinreihe

Die Erfindung betrifft Farbstoffmischungen, die Farbstoffe der Formel I

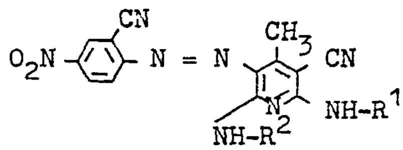

enthalten, wobei folgende Farbstoffe vorliegen :

| Farbstoff | $R^1$ | $R^2$ |
|---|---|---|
| 1 | $C_2H_4OH$ | $(CH_2)_3OC_2H_4OC_6H_5$ |
| 2 | $(CH_2)_3OC_2H_4OC_6H_5$ | $C_2H_4OH$ |
| 3 | $(CH_2)_3O(CH_2)_4OH$ | H |
| 4 | H | $(CH_2)_3O(CH_2)_4OH$ |

Die Isomeren 1 zu 2 und 3 zu 4 liegen ungefähr im Mengenverhältnis 70 : 30 vor, die Isomeren 1 und 2 in der Mischung zu ungefähr 65 bis 90 %, vorzugsweise 70 bis 80 %.

Die Einzelfarbstoffe können analog zu den in der deutschen Patentschrift 20 62 717 beschriebenen Methoden hergestellt werden, das Isomerenverhältnis von ungefähr 70 : 30 ergibt sich aufgrund der Synthese.

Erfindungsgemäße Mischungen, bei denen eine Mischkristallbildung vorliegt, erhält man aus den Komponenten durch Erhitzen, zweckmäßigerweise in Wasser, auf Temperaturen von ungefähr 80 bis 100 °C, vorzugsweise etwa 90 °C. Besonders zweckmäßig ist es, das Komponentengemisch durch Diazotierung des 2-Amino-5-nitrobenzonitrils und Kupplung mit den entsprechenden 2,6-Diaminopyridinderivaten herzustellen und anschließend gleich zu erhitzen.

Die erfindungsgemäßen Mischungen eignen sich vorzüglich zum Färben von Polyestern. Gegenüber der in der Patentanmeldung DE-A 25 25 505 beschriebenen β-Modifikation des Farbstoffes 1 zeichnen sich die erfindungsgemäßen Mischungen durch ein weiter verbessertes färberisches Verhalten, insbesondere eine erhöhte Farbstärke, und durch die einfachere Herstellbarkeit aus, da keine Behandlung unter Überdruck, d.h. im Autoklaven, notwendig ist.

In den folgenden Beispielen beziehen sich Angaben über Teile und Prozente, sofern nicht anders vermerkt, auf das Gewicht.

## Beispiel 1

22,8 Teile 2-Amino-5-nitro-benzonitril werden wie üblich in Schwefelsäure mit Nitrosylschwefelsäure diazotiert und auf eine Mischung aus 240 Teilen Wasser und 300 Teilen Eis gefällt. Dazu gibt man eine salzsaure Lösung aus 7,8 Teilen eines Gemisches aus 2-(ω-Hydroxybutoxypropyl-amino)-3-cyan-4-methyl-6-aminopyridin und der isomeren Verbindung, bei der die Substituenten in 2- und 6-Stellung vertauscht sind. Danach läßt man eine Dimethylformamidlösung von 40,3 Teilen eines Gemisches aus 2-(ω-Phenoxyäthoxypropylamino)-3-cyan-4-methyl-6-(hydroxyäthyl-amino)-pyridin und der isomeren Verbindung, bei der die Substituenten der 2- und 6-Stellung vertauscht sind, zulaufen. Der so hergestellte Ansatz wird sodann mit Natronlauge auf einen pH-Wert von 2,4 gestellt, wobei mit Eis die Temperatur unter 10 °C gehalten wird. Ist die Kupplung beendet, erhitzt man auf 90-95 °C und rührt 2 Stunden nach. Anschließend wird filtriert und mit heißem Wasser gewaschen. Nach der Trocknung erhält man 68 Teile des Farbstoffs in der färberisch wertvollen Mischkristallmodifikation.

## Beispiel 2

80 Teile der Farbstoffmischung, erhalten aus der Kupplung von 2-Amino-5-nitro-benzonitril auf 2-(bzw. 6)-(ω-Phenoxyäthoxypropylamino)-3-cyan-4-methyl-6-(bzw. 2)-hydroxyäthyl-aminopyridin und 20 Teile der Farbstoffmischung, erhalten aus der Kupplung von 2-Amino-5-nitro-benzonitril auf 2-(bzw. 6)-(ω-Hydroxybutoxypropylamino)-3-cyan-4-methyl-6-(bzw. 2)-aminopyridin werden in 2 000 Teile Wasser gegeben und 2 Stunden auf 95 °C erhitzt. Danach wird filtriert und getrocknet. Man erhält 100 Teile des Farbstoffs in der färberisch wertvollen Mischkristallmodifikation.

**Ansprüche**

1. Farbstoffmischungen, die Farbstoffe der Formel I

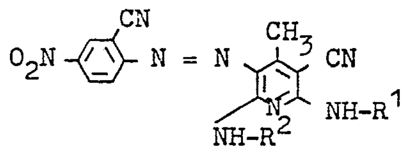

enthalten, wobei folgende Farbstoffe vorliegen :

| Farbstoff | $R^1$ | $R^2$ |
|---|---|---|
| 1 | $C_2H_4OH$ | $(CH_2)_3OC_2H_4OC_6H_5$ |
| 2 | $(CH_2)_3OC_2H_4OC_6H_5$ | $C_2H_4OH$ |
| 3 | $(CH_2)_3O(CH_2)_4OH$ | H |
| 4 | H | $(CH_2)_3O(CH_2)_4OH$ |

2. Mischungen gemäß Anspruch 1, die 65 bis 90 % der Farbstoffe 1 und 2 enthalten.
3. Mischungen gemäß Anspruch 1 und 2, die 70 bis 80 % der Farbstoffe 1 und 2 enthalten.

**Claims**

1. A dye mixture which contains dyes of the formula I

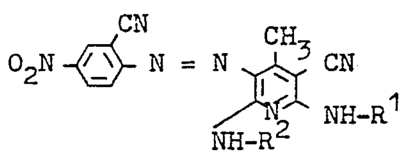

the following dyes being present :

| Dye | $R^1$ | $R^2$ |
|---|---|---|
| 1 | $C_2H_4OH$ | $(CH_2)_3OC_2H_4OC_6H_5$ |
| 2 | $(CH_2)_3OC_2H_4OC_6H_5$ | $C_2H_4OH$ |
| 3 | $(CH_2)_3O(CH_2)_4OH$ | H |
| 4 | H | $(CH_2)_3O(CH_2)_4OH$ |

2. A mixture as claimed in claim 1, which contains from 65 to 90 % of dyes 1 and 2.
3. A mixture as claimed in claims 1 and 2, which contains from 70 to 80 % of dyes 1 and 2.

**Revendications**

1. Mélanges de colorants contenant les colorants de formule I

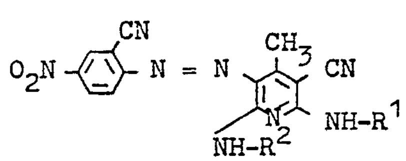

à savoir les colorants suivants :

| Colorant | $R^1$ | $R^2$ |
|---|---|---|
| 1 | $C_2H_4OH$ | $(CH_2)_3OC_2H_4OC_6H_5$ |
| 2 | $(CH_2)_3OC_2H_4OC_6H_5$ | $C_2H_4OH$ |
| 3 | $(CH_2)_3O(CH_2)_4OH$ | H |
| 4 | H | $(CH_2)_3O(CH_2)_4OH$ |

2. Mélanges selon la revendication 1, contenant de 65 à 90 % des colorants 1 et 2.
3. Mélanges selon les revendications 1 et 2, contenant de 70 à 80 % des colorants 1 et 2.